# EUROPÄISCHE PATENTSCHRIFT

(11) **EP 3 058 415 B1**
(45) Veröffentlichungstag und Bekanntmachung des Hinweises auf die Patenterteilung: **04.07.2018**
(21) Anmeldenummer: 14784212.4
(22) Anmeldetag: 13.10.2014
(51) Int. Cl.: G02B 23/10, F41G 1/34, F21V 8/00

(54) **VISIERVORRICHTUNG**
SIGHT DEVICE
DISPOSITIF DE VISÉE

(30) Priorität: 17.10.2013 AT 506702013
(43) Veröffentlichungstag der Anmeldung: 24.08.2016
(73) Patentinhaber: mb-microtec ag, 3172 Niederwangen bei Bern (CH)
(72) Erfinder: JAKOB, Daniel, CH-4914 Roggwil (CH); KIND, Hannes, CH-3012 Bern (CH)
(74) Vertreter: Laminger, Norbert
(86) Internationale Anmeldenummer: PCT/EP2014/071922
(87) Internationale Veröffentlichungsnummer: WO 2015/055596

(56) Entgegenhaltungen:
- WO-A1-2011/067291
- US-A- 3 409 770
- US-A1- 2009 013 581
- US-A1- 2011 280 040
- US-A1- 2012 151 817
- US-B1- 6 385 855

## Beschreibung

Die Erfindung betrifft eine Visiervorrichtung, insbesondere Reflexvisier oder Zielfernrohr, die eine Leuchteinrichtung zur Erzeugung oder Beleuchtung einer Zielmarke aufweist, wobei die Leuchteinrichtung einen Lichtleiter aus photolumineszierendem, insbesondere fluoreszierendem Material und eine an den Lichtleiter gekoppelte radiolumineszente Lichtquelle umfasst, wobei der Lichtleiter ausgebildet ist, um entlang zumindest eines Abschnittes seiner Längserstreckung Umgebungslicht aufzunehmen und in Photolumineszenzlicht umzuwandeln, und wobei das Absorptionsspektrum des photolumineszierenden Materials des Lichtleiters und das Emissionsspektrum der radiolumineszenten Lichtquelle im sichtbaren Bereich jeweils durch eine spektrale Bandbreite und eine mittlere Wellenlänge charakterisierbar sind.

Bekannte Visiervorrichtungen nutzen Umgebungslicht (Tageslicht), um eine Zielmarke, auch Absehen genannt, z.B. in Form eines Fadenkreuzes, eines Maßstabes oder eines Punktes, zu erzeugen oder zu beleuchten. Das Umgebungslicht wird mittels eines Lichtsammelleiters eingefangen und durch einen photolumineszierenden Farbstoff im Lichtsammelleiter in Fluoreszenz- und/oder Phosphoreszenzlicht umgewandelt.

Um auch in der Nacht oder in der Dämmerung eine Zielmarke mit ausreichender Leuchtkraft zu erhalten, besitzen bekannte Visiervorrichtungen eine radioluminszente Lichtquelle, deren Licht in den Lichtleiter gespeist und dort ebenfalls in Photolumineszenzlicht umgewandelt wird.

Das vom Lichtleiter erzeugte Photolumineszenzlicht kann nun in den Strahlengang der Visiervorrichtung geleitet bzw. eingespiegelt werden. Bei anderen Visiereinrichtungen kann das Photolumineszenzlicht eine bereits bestehende Zielmarke beleuchten, z.B. Kimme und/oder Korn. Die US 6 385 855 B1 offenbart eine Visiereinrichtung gemäß den Oberbegriff des Anspruchs 1. Die EP 0 830 559 B1 offenbart eine Visiereinrichtung mit einem Lichtsammelleiter und einem an den Lichtsammelleiter angekoppelten Triga-Licht als radiolumineszente Lichtquelle.

Der Nachteil solcher Leuchteinrichtungen besteht darin, dass aufgrund unzureichender Lichtausbeute durch die Umwandlung des Lichtes in Fluoreszenzlicht eine radiolumineszente Lichtquelle hoher Lichtstärke gewählt werden muss. Dies erhöht nicht nur die Kosten, sondern auch den Platzbedarf für größere Radiolichtquellen. Ein grundsätzliches Problem ist darin zu sehen, dass für das menschliche Auge gut sichtbares Licht, z.B. im grünen Wellenlängenbereich, eine Anregung entsprechender Fluoreszenzfarbstoffe im blauen bzw. violetten Bereich erfordert. Die Erzeugung von Anregungslicht dieser von vornherein dunklen Farbe in ausreichendem Maß würde eine raumfordernde (entsprechend groß dimensionierte Lichtquelle) und komplexe (möglichst verlustfreie Einspeisung des Anregungslichtes in den Lichtleiter) Konstruktion erfordern. Gerade bei Visiereinrichtungen ist jedoch der zur Verfügung stehende Raum stark beschränkt, sodass dieses Problem bislang nicht zufriedenstellend gelöst werden konnte.

Das Ziel der Erfindung besteht daher darin, dass diese Nachteile zu beseitigen und eine Visiereinrichtung bereitzustellen, die eine hohe Leuchtkraft für die Zielmarke zu Verfügung stellt, und zwar sowohl bei Tageslicht als auch in der Dämmerung und in der Nacht. Die Konstruktion soll platzsparend und kostengünstig sein.

Dieses Ziel wird mit einer Visiervorrichtung der eingangs genannten Art dadurch erreicht, dass die mittlere Wellenlänge des Emissionsspektrums der radiolumineszenten Lichtquelle größer ist als die mittlere Wellenlänge des Absorptionsspektrums des photolumineszierenden Materials des Lichtleiters.

Von der radiolumineszenten Lichtquelle emittiertes Licht wird dadurch nicht mehr primär zur Anregung des photolumeniszierenden Materials im Lichtleiter verwendet. Anstelle dessen wird ein hoher Anteil des von der radiolumineszenten Lichtquelle emittierten Lichtes durch den Lichtleiter geleitet, ohne dass sich seine Wellenlänge im Lichtleiter wesentlich ändert. Dadurch wird das Licht der radiolumineszenten Lichtquelle direkt für die Erzeugung oder Beleuchtung der Zielmarke verwendet.

Entsprechend ist die mittlere Energie des von der radiolumineszenten Lichtquelle emittierten Lichtes kleiner als die mittlere Energie des Absorptionsspektrums des photolumineszenten Lichtleiters.

Das vom Lichtleiter eingesammelte Umgebungslicht wird jedoch nach wie vor in Photolumineszenzlicht, insbesondere Fluoreszenzlicht umgewandelt. Denkbar wären selbstverständlich auch phosphoreszierende Farbstoffe im Lichtleiter, weswegen in der vorliegenden Anmeldung auch der Überbegriff ,Photolumineszenz' verwendet wird.

Ein weiterer Effekt der Erfindung besteht darin, dass die mittlere Wellenlänge des Emissionsspektrums der radiolumineszenten Lichtquelle nun wesentlich näher bei der mittleren Wellenlänge des Emissionsspektrums des photolumineszierenden Materials des Lichtleiters liegt, sodass zumindest benachbarte oder zumindest sehr ähnliche Farbtöne erhalten werden können, deren Überlagerung bereits zu einer deutlichen Leuchtkraftverstärkung führen. In einer bevorzugten Ausführungsform besitzen das von der radiolumeniszenten Lichtquelle emittierte Licht und das Photolumineszenzlicht des Lichtleiters sogar dieselbe Farbe, womit die Sichtbarkeit der Zielmarke weiter erhöht werden kann.

Üblicherweise sind das Absorptionsspektrum des photolumineszierenden Materials des Lichtleiters und das Emissionsspektrum der radiolumineszenten Lichtquelle im sichtbaren Bereich nicht auf eine einzige Wellenlänge beschränkt, sondern durch eine Wellenlängen-Verteilung beschreibbar. Diese ist durch ein Maximum bzw. einen Maximums-Bereich charakterisiert, der seitlich mehr oder weniger stark abfällt. Die Wellenlängenverteilung ist dabei jeweils durch eine spektrale Bandbreite und eine mittlere Wellenlänge charakterisierbar. Die Bandbreite hängt vom seitlichen Abfall der Kurve ab und entspricht der Breite auf halber Höhe des Peaks der Wellenlängenverteilung. Diese Breite wird auch Halbwertsbreite bzw. ,full width at half maximum' (FWHM) gennant. Die mittlere Wellenlänge im sichtbaren Bereich ergibt sich durch die Bildung des Mittelwertes der entsprechenden Wellenlängenverteilung.

Die radiolumineszente Lichtquelle ist vorzugsweise eine Tritium-Lichtquelle. Dabei ist gasförmiges Tritium in einer Kapsel, insbesondere einem Glasröhrchen, eingeschlossen. Die Kapsel ist mit einem Leuchtstoff beschichtet. Die vom radioaktiven Tritium emittierte Strahlung wird durch den Leuchtstoff in sichtbares Licht eines bestimmten Wellenlängenbereiches umgewandelt, z.B. grün, blau oder violett. Der Leuchtstoff ist ebenfalls ein Fluoreszenzfarbstoff, der entsprechend den Vorgaben der Erfindung (Farbe) ausgewählt werden kann.

Der Lichtleiter ist vorzugsweise aus Kunststoff, insbesondere aus Polymethylmethacrylat (PMMA) oder Polystyrol (PS), gebildet und enthält fluoreszierende und/oder phosphoreszierende Farbstoffe. Je nach gewünschter Farbe werden unterschiedliche Farbstoffe verwendet.

So kann z.B. grünes Fluoreszenzlicht (∼ 480nm bis 560nm) durch Cu⁺- und Al³⁺-dotiertes Zinksulfid als Fluoreszenzfarbstoff erhalten werden. Die Auswahl eines entsprechenden Farbstoffes kann durch den Fachmann ohne weitere Schwierigkeiten erfolgen.

Technische Fluoreszenzfarbstoffe bestehen z.B. aus Stoffen wie dem sehr häufig benutzten Zinksulfid und chemisch ähnlichen Verbindungen oder Oxiden der Selten-Erd-Metalle. Werden diese Verbindungen mit sogenannten Aktivatoren dotiert, lassen sich verschiedene Farben erzeugen. Als Aktivatoren werden häufig zwei- und dreiwertige Lanthanoid-Kationen verwendet. Zweiwertige Europium-Kationen erzeugen beispielsweise blaues Licht, während die dreiwertigen rotes Licht emittieren. Grünes Licht entsteht beispielsweise durch Cu+- und Al3+-dotiertes Zinksulfid. An dieser Stelle sei bemerkt, dass diese Farbstoffe lediglich als Beispiele angegeben sind, jedoch keinerlei Einschränkung der Erfindung darstellen. Jeder Farbstoff, der gemäß den Vorgaben der Erfindung und ihrer Ausführungsformen ausgebildet ist, kann gewählt werden. Dies stellt auch für den Fachmann keinerlei Schwierigkeiten dar.

In einem Abschnitt seiner Längserstreckung ist der Lichtleiter dem Umgebungslicht (mittelbar oder unmittelbar) ausgesetzt. Z.B. läuft der Lichtleiter an einer Außenseite der Visiereinrichtung oder sitzt hinter einem Fenster, durch das Umgebungslicht in den Lichtleiter gelangen kann. Denkbar sind auch Lichtleitmittel und/oder Lichtumlenkmittel und/oder Lichtfokussiermittel, die das Umgebungslicht zum Lichtleiter führen. Das Umgebungslicht wird üblicherweise in radialer Richtung im Lichtleiter aufgenommen.

Unter dem Begriff Zielmarke kann sowohl ein Lichtmuster (z.B. in den Strahlengang geleitet) als auch eine mechanische Zielmarke (z.B. Kimme und/oder Korn) verstanden werden. Art, Form, Größe und Muster unterliegen hier keinen Beschränkungen. Die Zielmarke (auch Absehen genannt) kann z.B. ein Fadenkreuz, einen bezifferten oder unbezifferten Maßstab, einen Zielpunkt oder ein Zielfenster bilden.

Bevorzugt ist die mittlere Wellenlänge des Emissionsspektrums der radiolumineszenten Lichtquelle um zumindest 30nm, vorzugsweise um zumindest 50nm, größer als die mittlere Wellenlänge des Absorptionsspektrums des photolumineszierenden Materials des Lichtleiters. Dadurch sind die Spektren ausreichend gegeneinander verschoben, wodurch verhindert wird, dass ein hoher Anteil des von der radiolumineszenten Lichtquelle emittierten Lichtes durch den Farbstoff im Lichtleiter absorbiert wird.

Bevorzugt betragen die spektrale Bandbreite des Emissionsspektrums der radiolumineszenten Lichtquelle und die spektrale Bandbreite des Absorptionsspektrums des photolumineszierenden Materials des Lichtleiters jeweils höchstens 100nm, vorzugsweise höchstens 80nm. Durch diese Maßnahme, die durch entsprechende Auswahl von Farbstoffen als photolumineszenztem Material erreicht wird, z.B. durch Cu⁺- und Al³⁺-dotiertes Zinksulfid im Falle grünen Lichtes, lassen sich die einzelnen Spektren gut separieren, sodass möglichst wenig Überlappung vorliegt.

Bevorzugt überlappen die spektrale Bandbreite des Emissionsspektrums der radiolumineszenten Lichtquelle und die spektrale Bandbreite des Absorptions-spektrums des photolumineszierenden Materials nicht. Diese Maßnahme bewirkt ebenfalls, dass ein hoher Anteil des von der radiolumineszenten Lichtquelle emittierten Lichtes durch den Lichtleiter unbeeinflusst, d.h. in seiner Wellenlänge unverändert, hindurchgeht. Der Absorptionsanteil kann dadurch klein gehalten werden.

Bevorzugt überlappen im sichtbaren Bereich höchstens 30%, vorzugsweise höchstens 20%, des Emissionsspektrums der radiolumineszenten Lichtquelle mit dem Absorptionsspektrum des photolumineszierenden Materials des Lichtleiters.

Bevorzugt überlappt im sichtbaren Bereich zumindest 50%, vorzugsweise zumindest 70%, des Emissionsspektrums der radiolumineszenten Lichtquelle mit dem Emissionsspektrum des photolumineszierenden Materials des Lichtleiters. Diese Maßnahme bewirkt, dass das Licht der radiolumineszenten Lichtquelle und das Photolumineszenzlicht des Lichtleiters zumindest ähnliche, im Spektrum benachbarte Farbtöne aufweisen, wodurch die Sichtbarkeit der Zielmarke erhöht werden kann. Besonders bevorzugt ist jene Variante, bei der das Licht der radiolumineszenten Lichtquelle und das Photolumineszenzlicht des Lichtleiters dieselbe Farbe aufweisen. So gibt es keine Farbunterschiede zwischen Tag und Nacht. Außerdem erscheint dem Nutzer die Zielmarke wesentlich heller.

Bevorzugt liegt das Emissionsspektrum der radiolumineszenten Lichtquelle im grünen und/oder gelben Wellenlängenbereich. Die Empfindlichkeit des menschlichen Auges ist im grünen Wellenbereich am größten. Auch die photometrische Leuchtdichte und die radiometrische Strahldichte von grünen (d.h. im grünen Wellenbereich emittierenden) bzw. grün-gelben Tritium-Lichtquellen sind wesentlich höher als jene von blauen oder violetten Lichtquellen derselben Größe. Da gemäß der Erfindung versucht wird das Absorptionsspektrum des Lichtleiters möglichst zu ,umgehen', und andererseits eine gut sichtbare Zielmarke zur Verfügung zu stellen, wofür grünes Licht am besten geeignet ist, stellt eine grüne radiolumineszente Lichtquelle eine besonders bevorzugte Ausführungsform dar.

Der Hauptvorteil ist, dass man grüne bis gelbgrüne Tritium-Lichtquellen (,Triga-Lichter') verwenden kann. Die grünen und gelbgrünen Tritium-Lichtquellen sind generell markant heller (in photometrischer Hinsicht für das Auge und radiometrisch hinsichtlich der Anzahl an Photonen) als die blauen und orangen und roten. Mit den grünen bis gelbgrünen Tritium-Lichtquellen steht also mehr Licht zur Verfügung als bei den anderen Farben. Somit kann mit dem erfindungsgemäßen Prinzip gleicher Radioaktivität (GBq Tritium) mehr erkennbares Licht generiert werden im Vergleich zum Stand der Technik.

Für die Produktion von grünem Fluoreszenzlicht (gut sichtbar für das Auge) im Lichtleiter müsste bei entsprechendem Fluoreszenzfarbstoff mit einer blauen Tritium-Lichtquelle (sehr dunkel) angeregt werden. Bei der Verwendung von grünen Tritium-Lichtquellen (hell) würde im Lichtleiter bei entsprechendem Fluoreszenzfarbstoff orangenes oder rotes Fluoreszenzlicht (nicht gut sichtbar für das Auge) generiert werden.

Das erfindungsgemäße Prinzip unterscheidet sich nun dadurch, dass der Effekt der Photolumineszenz-Anregung im Lichtleiter durch das von der radiolumineszenten Lichtquelle emittierte Licht möglichst klein gehalten wird und dass ein möglichst hoher Anteil des von der radiolumineszenten Lichtquelle emittierten Lichtes unbeeinflusst, d.h. in seiner Wellenlänge unverändert, für die Zielmarke genutzt wird.

Es ist somit besonders bevorzugt eine grüne oder grün-gelbe Tritium-Lichtquelle (hell) zusammen mit einem grünen Lichtleiter, d.h. mit einem grünen Photolumineszenz-Farbstoff (gut vom Auge sichtbar), zu verwenden. Das Prinzip kann auch für andere Farben verwendet werden. Jedoch ist der Effizienzvorteil bei grünem Licht besonders hoch. Die Verwendung anderer effizienter Leuchtstoffe als grün ist von der Erfindung selbstverständlich mitumfasst. Bei Vorliegen eines solchen effizienten Leuchtfarbstoffes kann das erfindungsgemäße Funktionsprinzip auch für diese Farbe (z.B. gelb, rot, orange, etc.) angewendet werden.

Bevorzugt liegt das Emissionsspektrum des photolumineszierenden Materials des Lichtleiters im grünen Wellenlängenbereich. Hier ergeben sich dieselben Vorteile wie bereits oben erwähnt, wobei die Überlagerung des im Lichtleiter entstehenden grünen Lichtes und des von der radioluminszenten Lichtquelle eingespeisten Lichtes eine ausgesprochen gute Sichtbarkeit der Zielmarke bewirkt.

Bevorzugt ist die radiolumineszente Lichtquelle an einer Stirnseite des Lichtleiters angeordnet, wodurch Licht der radiolumineszenten Lichtquelle durch die Stirnseite in den Lichtleiter eingekoppelt wird. Durch eine derartige Einkopplung können Lichtverluste effizient vermieden werden, zumal das Licht der radiolumineszenten Lichtquelle möglichst unbeeinflusst (d.h. das Absorptionsspektrum umgehend) durch den Lichtleiter geleitet werden soll.

Bevorzugt ist die Stirnseite des Lichtleiters mittels eines transparenten Klebers an die radiolumineszente Lichtquelle geklebt. Dies verhindert Lichtverluste und bietet eine mechanisch stabile Lösung. Als Kleber wird vorzugsweise ein sogenannter, refractive index matching' - Kleber verwendet. Der Brechungsindex wird über den Kleber so eingestellt, dass das Licht mit minimalen Verlusten durch die Grenzflächen durchtreten kann.

Bevorzugt weist die radiolumineszente Lichtquelle eine Längserstreckung auf (d.h. sie weist längliche Form auf), die quer zur Achse des Lichtleiters in seinem Endbereich steht. Die Lichtquelle ragt somit über die Stirnfläche hinaus. Damit können Lichtverluste auch bei nicht exakter Positionierung der Lichtquelle relativ zum Lichtleiter gering gehalten werden.

Bevorzugt ist die der radiolumineszenten Lichtquelle zugewandte Stirnseite des Lichtleiters eine polierte Fläche, wodurch der Lichteintritt ohne unerwünschte Reflexionen an der Stirnseite erfolgt. Bevorzugt handelt es sich um eine hoch-polierte Fläche.

Bevorzugt umfasst die Visiereinrichtung ein im Strahlengang angeordnetes Umkehrprisma, vorzugsweise ein Schmidt-Pechan-Prisma, und ist die Stirnseite des Lichtleiters, die der radiolumineszenten Lichtquelle abgewandt ist, auf eine insbesondere kreisförmige Öffnung in einer verspiegelten Planfläche des Umkehrprismas ausgerichtet. Hier kann die Zielmarke als Lichtmuster hoher Intensität erzeugt werden.

Eine bevorzugte Ausführungsform zeichnet sich dadurch aus, dass die der radiolumineszenten Lichtquelle abgewandte Stirnseite des Lichtleiters eine polierte Fläche ist, die vorzugsweise einem Prisma zur Einkoppelung des Lichtes in einen Strahlengang der Visiereinrichtung zugewandt ist. Dieses Prisma kann das vorhin genannte Umkehrprisma sein, aber auch z.B. nur ein (vorgeschaltetes) Umlenkprisma.

Beide Enden des Lichtleiters sind im optimalen Fall poliert. Dies erhöht die Lichteffizienz. Mit einem, refractive index matching'-Kleber kann dies weiter verbessert werden. Die polierten Flächen an den Enden des Lichtleiters stellen eine bevorzugte Ausführungsform dar, sind jedoch für die Verwirklichung der erfindungsgemäßen Grundidee nicht zwingend notwendig. Erfindungsgemäß ist die radiolumineszente Lichtquelle von einer insbesondere opaken Beschichtung umhüllt, wobei vorzugsweise die Beschichtung eine weiße Farbe ist, besonders bevorzugt eine mit TiO₂ pigmentierte Farbe. Dies erhöht die Effizienz der Lichtquelle. Nur in einem beschränkten Bereich, der dem Lichtleiter unmittelbar zugewandt ist, bleibt eine Lichtaustrittsöffnung frei von der opaken Beschichtung. Die Beschichtung stellt eine Reflexionsschicht dar, die das von der radiolumineszenten Lichtquelle erzeugte Licht zu dieser rückreflektiert.

Bevorzugt ist die Beschichtung auf der Oberfläche der radiolumineszenten Lichtquelle aufgebracht. In einer alternativen Ausführungsform ist die Beschichtung an der Innenseite eines die radiolumineszente Lichtquelle umgebenden Gehäuses angebracht.

Bevorzugt sind die radiolumineszente Lichtquelle und ein an die radiolumineszente Lichtquelle grenzender Endabschnitt des Lichtleiters von einem Gehäuse im Wesentlichen formschlüssig umgeben. Dies stellt eine kompakte, platzsparende Lösung dar, die für die nötige mechanische Stabilität der Verbindung zwischen Lichtquelle und Lichtleiter sorgt und einen optimalen Schutz vor Beschädigung und Verschmutzung gewährleistet.

Bevorzugt wird das Gehäuse aus zwei Teilen gebildet, wobei vorzugsweise die beiden Teile gegeneinander verschwenkbar sind oder mittels einer Schnappeinrichtung zusammengehalten werden. Diese Maßnahme erleichtert das Einbringen und Zusammenfügen von Lichtquelle und Lichtleiter, sowie das anschließende Verschließen der Lichtquelle und der Verbindungsstelle zwischen Lichtquelle und Lichtleiter.

Bevorzugt weist das Gehäuse zumindest eine Öffnung auf, die von außen zur Ankopplungsstelle zwischen der radiolumineszenten Lichtquelle und dem Lichtleiter führt, insbesondere zur Einbringung eines Klebers. So können Lichtleiter und Lichtquelle exakt ausgerichtet werden und positioniert bleiben, bevor sie miteinander verklebt werden. Der Zusammenbau wird dadurch wesentlich vereinfacht.

Bevorzugt sitzt im Gehäuse zumindest eine Schraube in einem Schrauben-gewinde, durch die die radiolumineszente Lichtquelle und/oder ein an die radiolumineszente Lichtquelle grenzender Endabschnitt des Lichtleiters geklemmt ist/sind. Dies ermöglicht eine einfache und zuverlässige Fixierung der Teile in der gewünschten Position.

Bevorzugt sind die radiolumineszente Lichtquelle und ein an die radiolumineszente Lichtquelle grenzender Endabschnitt des Lichtleiters durch einen insbesondere T-förmig ausgebildeten Schrumpfschlauch umgeben. Dies ermöglicht eine platzsparende und einfach zu bewerkstelligende Verbindung.

Bevorzugt ist die radiolumineszente Lichtquelle zusammen mit einem an die radiolumineszente Lichtquelle grenzenden Endabschnitt des Lichtleiters in ein Material eingegossen. Dadurch wird ebenfalls eine zuverlässige und langlebige Verbindung geschaffen, die Schmutz und Verunreinigungen außen vor hält.

Im Folgenden werden weitere bevorzugte Aspekte kursorisch aufgezählt, die jeweils gesondert oder zusammen verwirklicht sein können:
Der Lichtleiter besteht aus einem grünen fluoreszierenden Kunststoff;
Zumindest an einer Stirnseite ist der Lichtleiter hoch poliert; Durch die Polierung der Endflächen des Lichtleiters und die spezielle Ankopplung der Tritium-Lichtquelle und die Lichtsammlung im Bereich des Tritium-Lichtquelle mit der opaken Schicht soll eine optimale Energieausnutzung des Tritium-Lichtes für die Abbildung der Zielmarke im (Reflex)Visier erzielt werden;
Der Lichtleiter ist auf eine kreisringförmige Öffnung in einer verspiegelten Planfläche eines Schmidt-Pechan-Prismas ausgerichtet;
An der gegenüberliegenden Stirnseite ist über einen (refractive index matching) Kleber eine Tritium-Lichtquelle strahlungstechnisch angekoppelt;
Das Triga-Light ist bis zum Beginn des Lichtleiters mit einer opaken Reflexionsschicht umhüllt; wobei sich als optimale Lösung eine weiße opake Beschichtung herausgestellt hat; es sind aber auch andere Reflexionsschichten wie beispielsweise aus Silber oder Verspiegelungen möglich;
An die Einkopplung der Tritium-Lichtquelle bzw. an die Verbindung der Tritium-Lichtquelle mit dem Lichtleiter schließt ein Abschnitt des Lichtleiters an, über welche das Tageslicht in radialer Richtung in den Lichtleiter eintreten kann;
Die Energie des von der Tritium-Lichtquelle ausgesandten Lichtes soll nun möglichst kleiner sein als die Absorptionsenergie des Farbstoffes im Lichtleiter; d.h. die Tritium-Lichtquelle soll die fluoreszierenden und/oder phosphoreszierenden Stoffe in Lichtleiter möglichst nicht zum Leuchten anregen, um einen Energieverlust zu vermeiden;
Das Umgebungs- bzw. Tageslicht soll dagegen diese fluoreszierenden und/oder phosphoreszierenden Stoffe anregen, um eine Abbildung im (Reflex)Visier zu ermöglichen;
Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel einer Leuchteinrichtung für eine Visiervorrichtung;
- Fig. 2: ein weiteres Ausführungsbeispiel mit einer Einweg-Lehre;
- Fig. 3 bis 7: weitere Ausführungsbeispiele mit einem Gehäuse;
- Fig. 8: eine Visiervorrichtung in schematischer Darstellung;
- Fig. 9 und 10: erfindungsgemäße Ausführungsbeispiele für das Emissionsspektrum der radiolumineszenten Lichtquelle und die Emissions- und Absorptionsspektren des photolumineszierenden Materials des Lichtleiters in stark vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten der Visiervorrichtung und der Leuchteinrichtung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus der Visiervorrichtung und der Leuchteinrichtung diese bzw. deren Bestandteile teilweise unmaßstäblich und/oder vergrößert und/oder verkleinert dargestellt wurden.

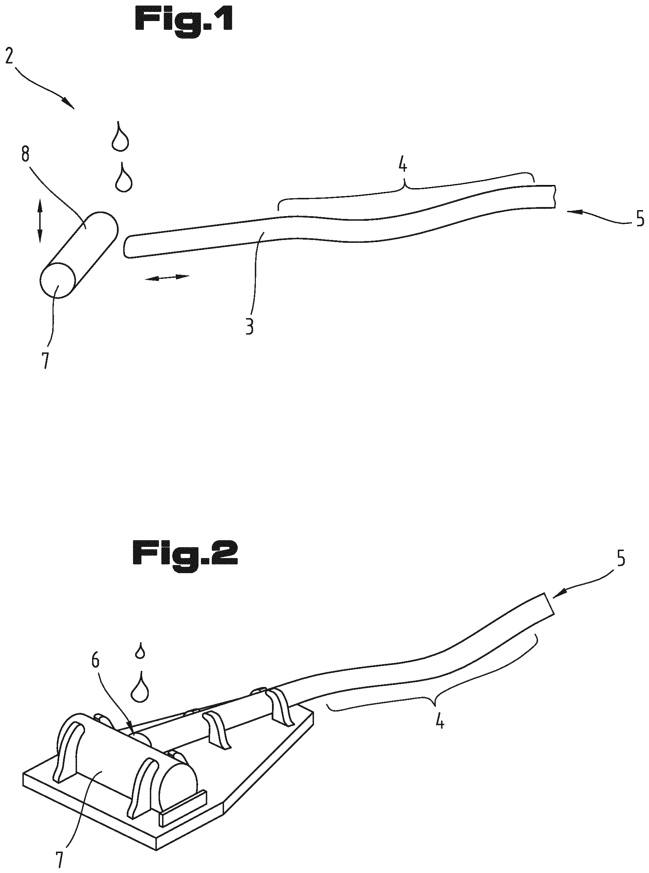

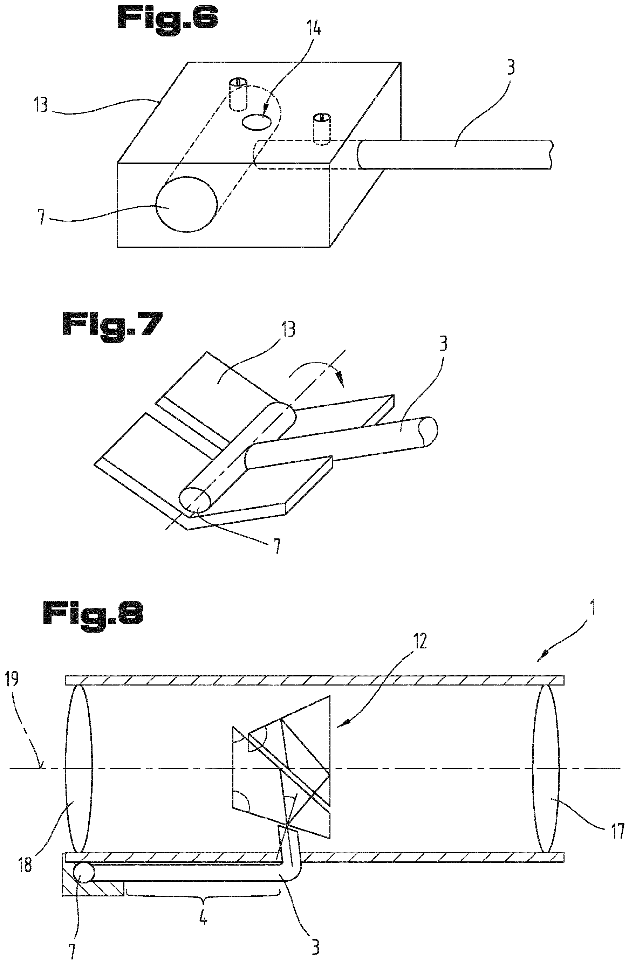

Die Fig. 1 bis 7 zeigen eine Leuchteinrichtung 2 zur Erzeugung oder Beleuchtung einer Zielmarke in einer Visiereinrichtung 1. Ein Beispiel einer Visiereinrichtung ist rein schematisch in Fig. 8 dargestellt. Im Strahlengang sind jene optischen Elemente dargestellt, die mit der Leuchteinrichtung 2 zusammenwirken. Andere (ebenfalls vorhandene Elemente) wurden der Übersichtlichkeit wegen weggelassen.

Die Leuchteinrichtung 2 umfasst einen Lichtleiter 3 aus photolumineszierendem, insbesondere fluoreszierendem Material und eine an den Lichtleiter 3 gekoppelte radiolumineszente Lichtquelle 7. Der Lichtleiter 3 ist ausgebildet, um entlang zumindest eines Abschnittes 4 seiner Längserstreckung Umgebungslicht aufzunehmen und in Photolumineszenzlicht umzuwandeln.

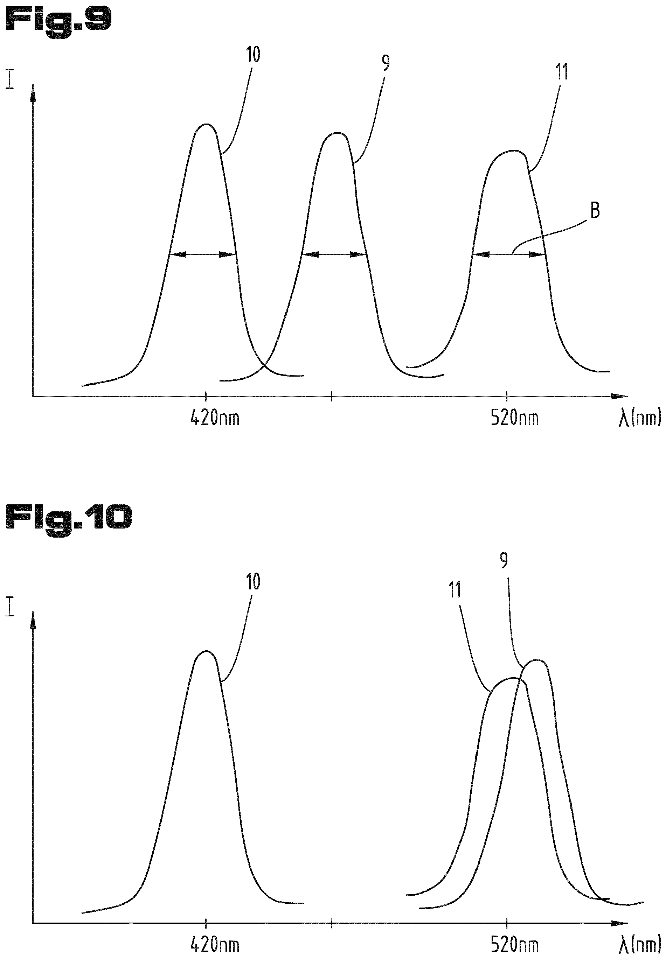

Das Absorptionsspektrum 10 des photolumineszierenden Materials des Lichtleiters 3 und das Emissionsspektrum 9 der radiolumineszenten Lichtquelle 7 im sichtbaren Bereich sind im Wesentlichen durch eine spektrale Bandbreite (B) und eine mittlere Wellenlänge charakterisierbar (Fig. 9 und 10). Wie aus den Fig. 9 und 10 zu sehen ist die mittlere Wellenlänge des Emissionsspektrums 9 der radiolumineszenten Lichtquelle 7 größer als die mittlere Wellenlänge des Absorptionsspektrums 10 des photolumineszierenden Materials des Lichtleiters 3. Die Bandbreite ergibt sich durch die ,full width at half maximum' (FWHM) und die mittlere Wellenlänge durch Bildung des Mittelwertes der Wellenlängenverteilung.

In Fig. 9 sind das Emissionsspektrum 9 der radiolumineszenten Lichtquelle 7 und das Emissionsspektrum 11 des photolumineszierenden Materials des Lichtleiters 3 voneinander beabstandet (d.h. sie überlappen nicht oder nur kaum).

Bevorzugt ist, wenn - wie auch aus Fig. 10 zu sehen - die mittlere Wellenlänge des Emissionsspektrums 9 der radiolumineszenten Lichtquelle 7 um zumindest 30nm, vorzugsweise um zumindest 50nm, größer ist als die mittlere Wellenlänge des Absorptionsspektrums 10 des photolumineszierenden Materials des Lichtleiters 3.

Dabei betragen vorzugsweise die spektrale Bandbreite des Emissionsspektrums 9 der radiolumineszenten Lichtquelle 7 und die spektrale Bandbreite des Absorptionsspektrums 10 des photolumineszierenden Materials des Lichtleiters 3 jeweils höchstens 100nm, vorzugsweise höchstens 80nm.

Besonders bevorzugt wird, wenn - wie aus beiden Figuren 9 und 10 ersichtlich - die spektrale Bandbreite des Emissionsspektrums 9 der radiolumineszenten Lichtquelle 7 und die spektrale Bandbreite des Absorptionsspektrums 10 des photolumineszierenden Materials des Lichtleiters 3 nicht überlappen. D.h. die Bandbreitenbereiche der Spektren 9 und 10 liegen zur Gänze außerhalb voneinander.

Ebenfalls zu sehen ist, dass im sichtbaren Bereich höchstens 30%, vorzugsweise höchstens 20%, des Emissionsspektrums 9 der radiolumineszenten Lichtquelle 7 mit dem Absorptionsspektrums 10 des photolumineszierenden Materials des Lichtleiters 3 überlappt.

Die besondere Ausführungsform von Fig. 10 zeigt (anders als Fig. 9), dass im sichtbaren Bereich zumindest 50%, vorzugsweise zumindest 70%, des Emissionsspektrums 9 der radiolumineszenten Lichtquelle 7 mit dem Emissionsspektrum 11 des photolumineszierenden Materials des Lichtleiters 3 überlappt.

Dabei liegt das Emissionsspektrum 9 der radiolumineszenten Lichtquelle 7 im grünen oder im grün-gelben Wellenlängenbereich und das Emissionsspektrum 11 des photolumineszierenden Materials des Lichtleiters 3 im grünen Wellenlängenbereich.

Die Wahl der entsprechenden radioluminszenten Lichtquellen und der dazugehörigen Lichtleiter nach den erfindungsgemäßen Vorgaben stellt für den Fachmann keine Schwierigkeit dar. Lichtquellen und Lichtleiter sind am Markt in beliebigen Ausführungen erhältlich.

Die Figuren 1 bis 7 zeigen, dass die radiolumineszente Lichtquelle 7 an einer Stirnseite 6 des Lichtleiters 3 angeordnet ist, wodurch Licht der radiolumineszenten Lichtquelle 7 durch die Stirnseite 6 in den Lichtleiter 3 eingekoppelt wird.

Die radiolumineszente Lichtquelle 7 kann eine Längserstreckung aufweisen, die quer zur Achse des Lichtleiters 3 in seinem Endbereich steht. Die Lichtquelle 7 und der Endabschnitt des Lichtleiters 3 bilden somit zusammen eine T-Form aus.

Die radiolumineszente Lichtquelle 7 (auch "triga-light" genannt) muss nicht zwingend länglich sein. Bevorzugt ist, dass die Kontaktfläche der radiolumineszenten Lichtquelle 7 grösser ist als die Eintrittsfläche des Lichtleiters. Quadratische und runde radiolumineszente Lichtquellen wären ebenfalls gut einsetzbar.

Die radiolumineszente Lichtquelle 7 ist von einer opaken Beschichtung 8 umhüllt, wobei vorzugsweise die Beschichtung 8 eine weiße Farbe ist, besonders bevorzugt eine mit TiO₂ pigmentierte Farbe. Die der radiolumineszenten Lichtquelle 7 zugewandte Stirnseite 6 des Lichtleiters 3 ist eine polierte Fläche. Die Stirnseite 6 des Lichtleiters 3 wird mittels eines transparenten Klebers an die radiolumineszente Lichtquelle 7 geklebt.

In der in Fig. 2 dargestellten Ausführungsform werden Lichtquelle 7 und Lichtleiter 3 auf einer Einweg-Lehre positioniert und durch Clips fixiert. Die Einweg-Lehre wird mit eingegossen. Dadurch wird eine zuverlässige Verbindung zwischen Lichtquelle 7 und Lichtleiter 3 erhalten. Selbstverständlich könnte die radiolumineszente Lichtquelle 7 zusammen mit einem an die radiolumineszente Lichtquelle 7 grenzenden Endabschnitt des Lichtleiters 3 auch ohne Positionierungsmittel, wie die Einweg-Lehre, in ein Material eingegossen sein.

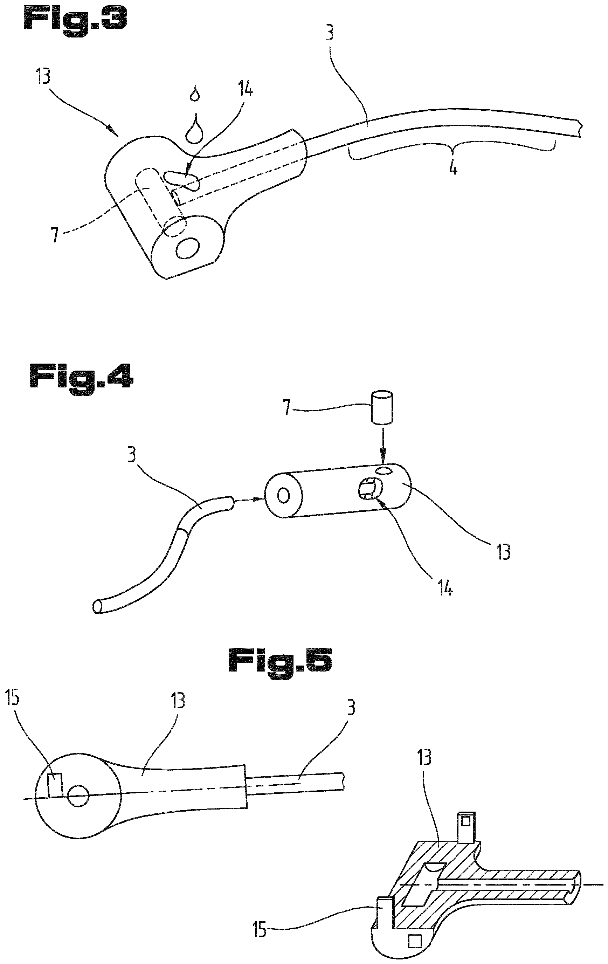

In der in Fig. 3 dargestellten Ausführungsform sind die radiolumineszente Lichtquelle 7 und ein an die radiolumineszente Lichtquelle 7 grenzender Endabschnitt des Lichtleiters 3 von einem Gehäuse 13 im Wesentlichen formschlüssig umgeben. Öffnungen zum Einbringen von Lichtquelle 7 und Lichtleiter 3 sind vorgesehen. Das Gehäuse 13 weist zumindest eine weitere Öffnung 14 auf, die von außen zur Ankopplungsstelle zwischen der radiolumineszenten Lichtquelle 7 und dem Lichtleiter 3 führt, insbesondere zur Einbringung eines Klebers.

Eine ähnliche Ausführungsform, allerdings mit einer abweichenden Gehäuseform zeigt Fig. 4.

In der in Fig. 5 dargestellten Ausführungsform wird das Gehäuse 13 aus zwei Teilen gebildet, die mittels einer Schnappeinrichtung 15 zusammengefügt bzw. zusammengehalten werden.

In der in Fig. 7 dargestellten Ausführungsform sind die beiden Gehäuseteile gegeneinander verschwenkbar, um von einer geöffneten Stellung in eine geschlossene Stellung zu gelangen.

In der in Fig. 6 dargestellten Ausführungsform ist zu sehen, dass im Gehäuse 13 zumindest eine Schraube 16 in einem Schraubengewinde sitzt, durch die die radiolumineszente Lichtquelle 7 und/oder ein an die radiolumineszente Lichtquelle 7 grenzender Endabschnitt des Lichtleiters 3 geklemmt ist/sind.

In einer alternativen Ausführungsform sind die radiolumineszente Lichtquelle 7 und ein an die radiolumineszente Lichtquelle 7 grenzender Endabschnitt des Lichtleiters 3 durch einen insbesondere T-förmig ausgebildeten Schrumpfschlauch umgeben.

Bei allen oben beschriebenen Ausführungsformen der Leuchteinrichtung 2 wird durch die Anbringung bzw. das Vorsehen einer Reflexionsschicht (z.B. einer weißen, silbernen, etc.) um die radiolumineszente Lichtquelle 7 die Effizienz gesteigert. Die Reflexionsschicht könnte eine äußere Beschichtung der Lichtquelle 7 sein. Alternativ kann die Reflexionsschicht an der Innenseite des die Lichtquelle 7 umgebenden Gehäuses 13 ausgebildet sein, d.h. das Gehäuse weist bereits diese reflektierenden Eigenschaften auf.

Fig. 8 zeigt schließlich eine Visiervorrichtung 1, insbesondere in Form eines Reflexvisieres oder Zielfernrohres, die eine Leuchteinrichtung 2 zur Erzeugung oder Beleuchtung einer Zielmarke aufweist. Die Darstellung ist rein schematisch und soll lediglich eine von vielen Möglichkeiten skizzieren.

Die Visiereinrichtung 1 aus Fig. 8 umfasst ein Objektiv 17, ein Okular 18 und ein im Strahlengang 19 angeordnetes Umkehrprisma 12, in Form eines Schmidt-Pechan-Prismas, über das Licht der Leuchteinrichtung 2 in den Strahlengang 19 eingekoppelt wird. Die Stirnseite 5 des Lichtleiters 3, die der radiolumineszenten Lichtquelle 7 abgewandt ist, ist auf eine insbesondere kreisförmige Öffnung in einer verspiegelten Planfläche des Umkehrprismas 12 ausgerichtet.

An dieser Stelle sei erwähnt, dass jedes andere geeignete optische Element zur Einleitung des Lichtes der Leuchteinrichtung 2 in den Strahlengang 19 verwendet werden könnte. Wie bereits eingangs erwähnt kann die Erfindung auch auf Visiervorrichtungen angewandt werden, bei denen die Leuchteinrichtung 2 eine mechanische Zielmarke beleuchtet.

### Bezugszeichenaufstellung

- 1: Visiervorrichtung
- 2: Leuchteinrichtung
- 3: Lichtleiter
- 4: Abschnitt des Lichtleiters 3
- 5: Stirnseite
- 6: Stirnseite
- 7: Radiolumineszente Lichtquelle
- 8: Opake Beschichtung
- 9: Emissionsspektrum der radiolumineszenten Lichtquelle 7
- 10: Absorptionsspektrum des photolumineszierenden Materials des Lichtleiters 3
- 11: Emissionsspektrum des photolumineszierenden Materials des Lichtleiters 3
- 12: Umkehrprisma
- 13: Gehäuse
- 14: Öffnung
- 15: Schnappeinrichtung
- 16: Schraube
- 17: Objektiv
- 18: Okular
- 19: Strahlengang der Visiereinrichtung 1

## Patentansprüche

1. Visiervorrichtung (1), insbesondere Reflexvisier oder Zielfernrohr, die eine Leuchteinrichtung (2) zur Erzeugung oder Beleuchtung einer Zielmarke aufweist, wobei die Leuchteinrichtung (2) einen Lichtleiter (3) aus photolumineszierendem, insbesondere fluoreszierendem Material und eine an den Lichtleiter (3) gekoppelte radiolumineszente Lichtquelle (7) umfasst, wobei der Lichtleiter (3) ausgebildet ist, um entlang zumindest eines Abschnittes (4) seiner Längserstreckung Umgebungslicht aufzunehmen und in Photolumineszenzlicht umzuwandeln, und wobei das Absorptionsspektrum (10) des photolumineszierenden Materials des Lichtleiters (3) und das Emissionsspektrum (9) der radiolumineszenten Lichtquelle (7) im sichtbaren Bereich jeweils durch eine spektrale Bandbreite und eine mittlere Wellenlänge charakterisierbar sind, wobei die mittlere Wellenlänge des Emissionsspektrums (9) der radiolumineszenten Lichtquelle (7) größer ist als die mittlere Wellenlänge des Absorptionsspektrums (10) des photolumineszierenden Materials des Lichtleiters (3), **dadurch gekennzeichnet dass** die radiolumineszente Lichtquelle (7) von einer insbesondere opaken Beschichtung (8) umhüllt ist, die das von der radiolumineszenten Lichtquelle (7) erzeugte Licht zu dieser zurückreflektiert, wobei die Beschichtung auf der Oberfläche der radiolumineszenten Lichtquelle (7) aufgebracht ist oder wobei die Beschichtung an der Innenseite eines die radiolumineszente Lichtquelle (7) umgebenden Gehäuses (13) angebracht ist.

2. Visiervorrichtung nach Anspruch 1, **dadurch gekennzeichnet, dass** die mittlere Wellenlänge des Emissionsspektrums (9) der radiolumineszenten Lichtquelle (7) um zumindest 30nm, vorzugsweise um zumindest 50nm, größer ist als die mittlere Wellenlänge des Absorptionsspektrums (10) des photolumineszierenden Materials des Lichtleiters (3).

3. Visiervorrichtung nach Anspruch 1 oder 2, **dadurch gekennzeichnet, dass** die spektrale Bandbreite des Emissionsspektrums (9) der radiolumineszenten Lichtquelle (7) und die spektrale Bandbreite des Absorptionsspektrums (10) des photolumineszierenden Materials des Lichtleiters (3) jeweils höchstens 100nm, vorzugsweise höchstens 80nm betragen.

4. Visiervorrichtung nach einem der vorhergehenden Ansprüche, **dadurch gekennzeichnet, dass** die spektrale Bandbreite des Emissionsspektrums (9) der radiolumineszenten Lichtquelle (7) und die spektrale Bandbreite des Absorptionsspektrums (10) des photolumineszierenden Materials des Lichtleiters (3) nicht überlappen.

5. Visiervorrichtung nach einem der vorhergehenden Ansprüche, **dadurch gekennzeichnet, dass** im sichtbaren Bereich höchstens 30%, vorzugsweise höchstens 20%, des Emissionsspektrums (9) der radiolumineszenten Lichtquelle (7) mit dem Absorptionsspektrums (10) des photolumineszierenden Materials des Lichtleiters (3) überlappt.

6. Visiervorrichtung nach einem der vorhergehenden Ansprüche, **dadurch gekennzeichnet, dass** im sichtbaren Bereich zumindest 50%, vorzugsweise zumindest 70%, des Emissionsspektrums (9) der radiolumineszenten Lichtquelle (7) mit dem Emissionsspektrum (11) des photolumineszierenden Materials des Lichtleiters (3) überlappt.

7. Visiervorrichtung nach einem der vorhergehenden Ansprüche, **dadurch gekennzeichnet, dass** das Emissionsspektrum (9) der radiolumineszenten Lichtquelle (7) im grünen und/oder gelben Wellenlängenbereich liegt.

8. Visiervorrichtung nach einem der vorhergehenden Ansprüche, **dadurch gekennzeichnet, dass** das Emissionsspektrum (11) des photolumineszierenden Materials des Lichtleiters (3) im grünen Wellenlängenbereich liegt.

9. Visiervorrichtung nach einem der vorhergehenden Ansprüche, **dadurch gekennzeichnet, dass** die radiolumineszente Lichtquelle (7) an einer Stirnseite (6) des Lichtleiters (3) angeordnet ist, wodurch Licht der radiolumineszenten Lichtquelle (7) durch die Stirnseite (6) in den Lichtleiter (3) eingekoppelt wird.

10. Visiervorrichtung nach Anspruch 9, **dadurch gekennzeichnet, dass** die Stirnseite (6) des Lichtleiters (3) mittels eines transparenten Klebers an die radiolumineszente Lichtquelle (7) geklebt ist.

11. Visiervorrichtung nach Anspruch 9 oder 10, **dadurch gekennzeichnet, dass** die radiolumineszente Lichtquelle (7) eine Längserstreckung aufweist, die quer zur Achse des Lichtleiters (3) in seinem Endbereich steht.

12. Visiervorrichtung nach einem der Ansprüche 9 bis 11, **dadurch gekennzeichnet, dass** die der radiolumineszenten Lichtquelle (7) zugewandte Stirnseite (6) des Lichtleiters (3) eine polierte Fläche ist.

13. Visiervorrichtung nach einem der vorhergehenden Ansprüche, **dadurch gekennzeichnet, dass** die Visiereinrichtung (1) ein im Strahlengang angeordnetes Umkehrprisma (12), vorzugsweise ein Schmidt-Pechan-Prisma, umfasst und dass die Stirnseite (5) des Lichtleiters (3), die der radiolumineszenten Lichtquelle (7) abgewandt ist, auf eine insbesondere kreisförmige Öffnung in einer verspiegelten Planfläche des Umkehrprismas (12) ausgerichtet ist.

14. Visiervorrichtung nach einem der vorhergehenden Ansprüche, **dadurch gekennzeichnet, dass** die der radiolumineszenten Lichtquelle (7) abgewandte Stirnseite des Lichtleiters (3) eine polierte Fläche ist, die vorzugsweise einem Prisma zur Einkoppelung des Lichtes in einen Strahlengang der Visiereinrichtung (1) zugewandt ist.

15. Visiervorrichtung nach einem der vorhergehenden Ansprüche, **dadurch gekennzeichnet, dass** die Beschichtung (8) eine opake Beschichtung ist und dass nur in einem beschränkten Bereich, der dem Lichtleiter (3) unmittelbar zugewandt ist, eine Lichtaustrittsöffnung frei bleibt von der opaken Beschichtung (8).

16. Visiervorrichtung nach einem der vorhergehenden Ansprüche, **dadurch gekennzeichnet, dass** die Beschichtung (8) eine weiße Farbe ist, besonders bevorzugt eine mit TiO₂ pigmentierte Farbe.

17. Visiervorrichtung nach einem der vorhergehenden Ansprüche, **dadurch gekennzeichnet, dass** die radiolumineszente Lichtquelle (7) und ein an die radiolumineszente Lichtquelle (7) grenzender Endabschnitt des Lichtleiters (3) von einem Gehäuse (13) im Wesentlichen formschlüssig umgeben sind.

18. Visiervorrichtung nach Anspruch 17, **dadurch gekennzeichnet, dass** das Gehäuse (13) aus zwei Teilen gebildet wird, wobei vorzugsweise die beiden Teile gegeneinander verschwenkbar sind oder mittels einer Schnappeinrichtung (15) zusammengehalten werden.

19. Visiervorrichtung nach Anspruch 17 oder 18, **dadurch gekennzeichnet, dass** das Gehäuse (13) zumindest eine Öffnung (14) aufweist, die von außen zur Ankopplungsstelle zwischen der radiolumineszenten Lichtquelle (7) und dem Lichtleiter (3) führt, insbesondere zur Einbringung eines Klebers.

20. Visiervorrichtung nach einem der Ansprüche 17 bis 19, **dadurch gekennzeichnet, dass** im Gehäuse (13) zumindest eine Schraube (16) in einem Schraubengewinde sitzt, durch die die radiolumineszente Lichtquelle (7) und/oder ein an die radiolumineszente Lichtquelle (7) grenzender Endabschnitt des Lichtleiters (3) geklemmt ist/sind.

21. Visiervorrichtung nach einem der vorhergehenden Ansprüche, **dadurch gekennzeichnet, dass** die radiolumineszente Lichtquelle (7) und ein an die radiolumineszente Lichtquelle (7) grenzender Endabschnitt des Lichtleiters (3) durch einen insbesondere T-förmig ausgebildeten Schrumpfschlauch umgeben sind.

22. Visiervorrichtung nach einem der vorhergehenden Ansprüche, **dadurch gekennzeichnet, dass** die radiolumineszente Lichtquelle (7) zusammen mit einem an die radiolumineszente Lichtquelle (7) grenzenden Endabschnitt des Lichtleiters (3) in ein Material eingegossen ist.

## Claims

1. A sight device (1), particularly a reflector sight or telescopic sight, with a lighting apparatus (2) for generating or illuminating a target mark, wherein the lighting apparatus (2) comprises an optical waveguide (3) of photoluminescent material, particularly fluorescent material, and a radioluminescent light source (7) coupled to the optical waveguide (3), wherein the optical waveguide (3) is designed for absorbing ambient light along at least a section (4) of its longitudinal extent and for converting said ambient light into photoluminescent light, wherein the absorption spectrum (10) of the photoluminescent material of the optical waveguide (3) and the emission spectrum (9) of the radioluminescent light source (7) in the visible range can be respectively **characterized by** a spectral bandwidth and a center wavelength, and wherein the center wavelength of the emission spectrum (9) of the radioluminescent light source (7) is greater than the center wavelength of the absorption spectrum (10) of the photoluminescent material of the optical waveguide (3), **characterized in that** the radioluminescent light source (7) is enclosed by a particularly opaque coating (8) that reflects the light generated by the radioluminescent light source (7) back to this light source, wherein the coating is applied on the surface of the radioluminescent light source (7) or wherein the coating is arranged on the inner side of a housing (13) that encloses the radioluminescent light source (7).

2. The sight device according to claim 1, **characterized in that** the center wavelength of the emission spectrum (9) of the radioluminescent light source (7) is greater than the center wavelength of the absorption spectrum (10) of the photoluminescent material of the optical waveguide (3) by at least 30 nm, preferably by at least 50 nm.

3. The sight device according to claim 1 or 2, **characterized in that** the spectral bandwidth of the emission spectrum (9) of the radioluminescent light source (7) and the spectral bandwidth of the absorption spectrum (10) of the photoluminescent material of the optical waveguide (3) respectively amount to no more than 100 nm, preferably no more than 80 nm.

4. The sight device according to one of the preceding claims, **characterized in that** the spectral bandwidth of the emission spectrum (9) of the radioluminescent light source (7) and the spectral bandwidth of the absorption spectrum (10) of the photoluminescent material of the optical waveguide (3) do not overlap.

5. The sight device according to one of the preceding claims, **characterized in that** no more than 30 %, preferably no more than 20 %, of the emission spectrum (9) of the radioluminescent light source (7) overlap with the absorption spectrum (10) of the photoluminescent material of the optical waveguide (3) in the visible range.

6. The sight device according to one of the preceding claims, **characterized in that** at least 50 %, preferably at least 70 %, of the emission spectrum (9) of the radioluminescent light source (7) overlap with the emission spectrum (11) of the photoluminescent material of the optical waveguide (3) in the visible range.

7. The sight device according to one of the preceding claims, **characterized in that** the emission spectrum (9) of the radioluminescent light source (7) lies in the green and/or yellow wavelength range.

8. The sight device according to one of the preceding claims, **characterized in that** the emission spectrum (11) of the photoluminescent material of the optical waveguide (3) lies in the green wavelength range.

9. The sight device according to one of the preceding claims, **characterized in that** the radioluminescent light source (7) is arranged on an end face (6) of the optical waveguide (3) such that light of the radioluminescent light source (7) is coupled into the optical waveguide (3) through its end face (6).

10. The sight device according to claim 9, **characterized in that** the end face (6) of the optical waveguide (3) is bonded to the radioluminescent light source (7) by means of a transparent adhesive.

11. The sight device according to claim 9 or 10, **characterized in that** the radioluminescent light source (7) has a longitudinal extent, which is oriented transverse to the axis of the optical waveguide (3) in its end region.

12. The sight device according to one of claims 9 to 11, **characterized in that** the end face (6) of the optical waveguide (3), which faces the radioluminescent light source (7), is a polished surface.

13. The sight device according to one of the preceding claims, **characterized in that** the sight device (1) comprises an inverting prism (12), preferably a Schmidt-Pechan prism, arranged in the beam path, and **in that** the end face (5) of the optical waveguide (3), which faces away from the radioluminescent light source (7), is aligned with a particularly circular opening in a mirrored plane surface of the inverting prism (12).

14. The sight device according to one of the preceding claims, **characterized in that** the end face of the optical waveguide (3), which faces away from the radioluminescent light source (7), is a polished surface that preferably faces a prism for coupling the light into a beam path of the sight device (1).

15. The sight device according to one of the preceding claims, **characterized in that** the coating (8) is an opaque coating and that a light emission aperture only remains free of the opaque coating (8) in a limited area, which directly faces the optical waveguide (3).

16. The sight device according to one of the preceding claims, **characterized in that** the coating (8) is a white paint, particularly a paint pigmented with TiO₂.

17. The sight device according to one of the preceding claims, **characterized in that** the radioluminescent light source (7) and an end section of the optical waveguide (3) bordering on the radioluminescent light source (7) are essentially enclosed by a housing (13) in a form-fitting fashion.

18. The sight device according to claim 17, **characterized in that** the housing (13) is composed of two parts, wherein the two parts preferably can be pivoted relative to one another or are held together by means of a snap mechanism (15).

19. The sight device according to claim 17 or 18, **characterized in that** the housing (13) features at least one opening (14), which leads from outside to the coupling point between the radioluminescent light source (7) and the optical waveguide (3), particularly for introducing an adhesive.

20. The sight device according to one of claims 17 to 19, **characterized in that** at least one screw (16) is seated in a screw thread in the housing (13), wherein the radioluminescent light source (7) and/or an end section of the optical waveguide (3) bordering on the radioluminescent light source (7) is/are clamped in position by means of said screw.

21. The sight device according to one of the preceding claims, **characterized in that** the radioluminescent light source (7) and an end section of the optical waveguide (3) bordering on the radioluminescent light source (7) are enclosed by heat-shrinkable tubing, which is particularly realized in a T-shaped fashion.

22. The sight device according to one of the preceding claims, **characterized in that** the radioluminescent light source (7) is cast into a material together with an end section of the optical waveguide (3) bordering on the radioluminescent light source (7).

## Revendications

1. Dispositif de visée (1), plus particulièrement viseur reflex ou lunette de visée, qui comprend un dispositif d'éclairage (2) pour la production ou l'éclairage d'un repère de visée, le dispositif d'éclairage (2) comprenant une fibre optique (3) en matériau photo-luminescent, plus particulièrement fluorescent, et une source de lumière (7) radio-luminescente couplée à la fibre optique (3), la fibre optique (3) étant conçue pour absorber, le long d'au moins une portion (4) de son extension longitudinal, la lumière ambiante et la convertir en lumière de photo-luminescence et le spectre d'absorption (10) du matériau photo-luminescent de la fibre optique (3) et le spectre d'émission (9) de la source de lumière radio-luminescente (7) peuvent être caractérisés dans le domaine visible chacun par une largeur de bande spectrale et une longueur d'onde centrale, la longueur d'onde centrale du spectre d'émission (9) de la source de lumière radio-luminescente (7) étant supérieure à la longueur d'onde centrale du spectre d'absorption (10) du matériau photo-luminescent de la fibre optique (3),
**caractérisé en ce que**
la source de lumière radio-luminescente (7) est enveloppée d'un revêtement (8), plus particulièrement opaque, qui réfléchit la lumière générée par la source de lumière radio-luminescente (7) vers elle, le revêtement étant appliqué sur la surface de la source de lumière radio-luminescente (7) ou le revêtement étant appliqué à l'intérieur d'un boîtier (13) entourant la source de lumière radio-luminescente (7).

2. Dispositif de visée selon la revendication 1, **caractérisé en ce que** la longueur d'onde centrale du spectre d'émission (9) de la source de lumière radio-luminescente (7) est d'au moins 30 nm, de préférence d'au moins 50 nm supérieure à la longueur d'onde centrale du spectre d'absorption (10) du matériau photo-luminescent de la fibre optique (3).

3. Dispositif de visée selon la revendication 1 ou 2, **caractérisé en ce que** la largeur de bande spectrale du spectre d'émission (9) de la source de lumière radio-luminescente (7) et la largeur de bande spectrale du spectre d'absorption (10) du matériau photo-luminescent de la fibre optique (3) sont respectivement de 100 nm maximum, de préférence de 80 nm maximum.

4. Dispositif de visée selon l'une des revendications précédentes, **caractérisé en ce que** la largeur de bande spectrale du spectre d'émission (9) de la source de lumière radio-luminescente (7) et la largeur de bande spectrale du spectre d'absorption (10) du matériau photo-luminescent de la fibre optique (3) ne se superposent pas.

5. Dispositif de visée selon l'une des revendications précédentes, **caractérisé en ce que**, dans le domaine visible, au maximum 30 %, de préférence au maximum 20 % du spectre d'émission (9) de la source de lumière radio-luminescente (7) se superpose avec le spectre d'absorption (10) du matériau photo-luminescent de la fibre optique (3).

6. Dispositif de visée selon l'une des revendications précédentes, **caractérisé en ce que**, dans le domaine visible, au moins 50 %, de préférence au moins 70 % du spectre d'émission (9) de la source de lumière radio-luminescente (7) se superpose avec le spectre d'émission (11) du matériau photo-luminescent de la fibre optique (3).

7. Dispositif de visée selon l'une des revendications précédentes, **caractérisé en ce que** le spectre d'émission (9) de la source de lumière radio-luminescente (7) se trouve dans le domaine de longueur vert et/ou jaune.

8. Dispositif de visée selon l'une des revendications précédentes, **caractérisé en ce que** le spectre d'émission (11) du matériau photo-luminescent de la fibre optique (3) se trouve dans le domaine de longueur d'onde vert.

9. Dispositif de visée selon l'une des revendications précédentes, **caractérisé en ce que** la source de lumière radio-luminescente (7) est disposée au niveau d'une face frontale (6) de la fibre optique (3), ce qui permet d'introduire la lumière de la source de lumière radio-luminescente (7) par la face frontale (6) dans la fibre optique (3).

10. Dispositif de visée selon la revendication 9, **caractérisé en ce que** la face frontale (6) de la fibre optique (3) est collée au moyen d'une colle transparente à la source de lumière radio-luminescente (7).

11. Dispositif de visée selon la revendication 9 ou 10, **caractérisé en ce que** la source de lumière radio-luminescente (7) présente une extension longitudinale qui est transversale à l'axe de la fibre optique (3) dans sa partie d'extrémité.

12. Dispositif de visée selon l'une des revendications 9 à 11, **caractérisé en ce que** la face frontale (6) de la fibre optique (3), orientée vers la source de lumière radio-luminescente (7), est une surface polie.

13. Dispositif de visée selon l'une des revendications précédentes, **caractérisé en ce que** le dispositif de visée (1) comprend un prisme d'inversion (12), disposé dans le trajet des faisceaux, de préférence un prisme de Schmidt-Pechan, et **en ce que** la face frontale (5) de la fibre optique (3), qui est opposée à la source de lumière radio-luminescente (7), est orientée vers une ouverture plus particulièrement circulaire dans une surface plane réfléchissante du prisme d'inversion (12).

14. Dispositif de visée selon l'une des revendications précédentes, **caractérisé en ce que** la face frontale, opposée à la source de lumière radio-luminescente (7), de la fibre optique (3) est une surface polie qui est orientée de préférence vers un prisme pour l'introduction de la lumière dans un trajet de faisceaux du dispositif de visée (1).

15. Dispositif de visée selon l'une des revendications précédentes, **caractérisé en ce que** le revêtement (8) est un revêtement opaque et **en ce que**, uniquement dans une zone limitée, qui est orientée directement vers la fibre optique (3), une ouverture de sortie de lumière reste exempte du revêtement opaque (8).

16. Dispositif de visée selon l'une des revendications précédentes, **caractérisé en ce que** le revêtement (8) est une peinture blanche, de préférence une peinture blanche pigmentée avec du TiO₂.

17. Dispositif de visée selon l'une des revendications précédentes, **caractérisé en ce que** la source de lumière radio-luminescente (7) et une portion d'extrémité, adjacente à la source de lumière radio-luminescente (7), de la fibre optique (3) sont entourées par un boîtier (13) globalement par complémentarité de forme.

18. Dispositif de visée selon la revendication 17, **caractérisé en ce que** le boîtier (13) est constitué de deux parties, de préférence les deux parties étant pivotantes l'une par rapport à l'autre ou étant maintenues ensemble au moyen d'un dispositif d'encliquetage (15).

19. Dispositif de visée selon la revendication 17 ou 18, **caractérisé en ce que** le boîtier (13) comprend au moins une ouverture (14) qui conduit de l'extérieur vers le point de couplage entre la source de lumière radio-luminescente (7) et la fibre optique (3), plus particulièrement pour l'introduction d'une colle.

20. Dispositif de visée selon l'une des revendications 17 à 19, **caractérisé en ce que**, dans le boîtier (13), se trouve au moins une vis (16) dans un filetage de vis, par l'intermédiaire de laquelle la source de lumière radio-luminescente (7) et/ou une portion d'extrémité, adjacente à la source de lumière radio-luminescente (7), de la fibre optique (3) est/sont bloquée(s).

21. Dispositif de visée selon l'une des revendications précédentes, **caractérisé en ce que** la source de lumière radio-luminescente (7) et une portion d'extrémité, adjacente à la source de lumière radio-luminescente (7), de la fibre optique (3) sont entourée par une gaine rétractable, plus particulièrement en forme de T.

22. Dispositif de visée selon l'une des revendications précédentes, **caractérisé en ce que** la source de lumière radio-luminescente (7) est coulée, ensemble avec une portion d'extrémité, adjacente à la source de lumière radio-luminescente (7), de la fibre optique (3) dans un matériau.
